Europäisches Patentamt

European Patent Office

Office européen des brevets

(11) Publication number: 0 193 503 A2

# EUROPEAN PATENT APPLICATION

(21) Application number: 86830048.4

(22) Date of filing: 25.02.86

(51) Int. Cl.⁴: **F16K 1/226** , F16K 1/22

(30) Priority: 26.02.85 IT 1964585

(43) Date of publication of application:
03.09.86 Bulletin 86/36

(84) Designated Contracting States:
AT BE CH DE FR GB LI LU NL SE

(71) Applicant: REMOSA S.p.A.
Viale Pula, 37
I-09100 Cagliari(IT)

(72) Inventor: Mambrini, Romano
Via di Torre Gaia 18
I-00133 Roma(IT)

(74) Representative: Perani, Aurelio et al
c/o JACOBACCI-CASETTA & PERANI S.N.C. Via
Visconti di Modrone 7
I-20122 Milano(IT)

(54) **Butterfly valve for bypass ducting of turbines for recovering mechanical energy from the exhaust gases for a catalytic cracking plant.**

(57) This butterfly valve (1), particularly for use in bypass ducting of turbines for recovering mechanical energy from the exhaust gases of a catalytic cracking plant, comprises a substantially cylindrical, hollow valve body (2) formed with two diametrically opposed bores (8, 9) which accomodate an actuating shaft (10) carried rotatably in the valve body (2). Keyed diametrically across the shaft (10) is a disk-like shutter (15) having opposite peripheral flat sealing surfaces (19, 20) for tight engagement by contact with abutment seats (21, 22) formed of a pair of semi-circular ribs formed on the body (2). The shutter (15) includes two wings (16, 17) attached to a diametrical hollow hub (18) for mounting on the shaft (10); the hub (18) has a shorter length than the shutter diameter, to enable machining of the shutter sealing surfaces (19, 20) on a turning lathe. The valve (1) also comprises a pair of bushes (25, 26) fitting slidingly within the bores (8, 9) in the valve body (2) between the shaft (10) and the body (2) itself and being urged elastically toward the shutter (15).

At each end of the shutter hub (18), the valve (1) has a respective sleeve insert (23, 24) welded to the shutter (15) as an axial extension of the hub (18). Each bush (25, 26) bears, therefore, on a respective sleeve insert (22, 24); advantageously, bush and insert have the same diameter.

With this butterfly valve (1), the sealing characteristic with the valve closed is greatly improved.

Fig-6

# "BUTTERFLY VALVE FOR BYPASS DUCTING OF TURBINES FOR RECOVERING MECHANICAL ENERGY FROM THE EXHAUST GASES FOR A CATALYTIC CRACKING PLANT"

This invention relates to a butterfly valve, particularly for bypass ducting of turbines for recovering mechanical energy from the exhaust gases of a catalytic cracking plant, wherein a disk-like shutter has a hollow hub diametrically across it for mounting on a shutter actuating shaft extending over a shorter length than the shutter diameter.

As is known, catalytic cracking plants release large amounts of exhaust gases. These gases, being at high temperature and pressure, are possessed of a large amount of energy which was normally wasted in the past.

However, the growing costs of energy have favored the practice of recovering part of the exhaust gas energy in the form of mechanical energy. In practice, the exhaust gases from catalytic cracking plants are presently utilized to power one or more gas turbines, which deliver, accordingly, mechanical energy to drive one or more electric generators.

In parallel with the turbines, a bypass conduit must be provided to prevent failure of the turbine (or a mere shutdown for servicing) from causing damage to the cracking plant. In fact, for the plant to operate correctly, the exhaust back-pressure must be constant. In the event of a turbine shutdown, the bypass conduit must open simultaneously, which conduit is to be dimensioned such that the overall load loss of the gas in flowing through it equals the load loss through the turbine; in other words, the upstream-lying cracking plant should not "sense" any turbine shutdowns.

The bypass conduit is provided, therefore, with a valving member which is normally closed and moves to its open position within a very short time equal to the turbine shutdown time; in general, the required action time is of about one twentieth of a second.

The valving members generally employed are butterfly valves, because it is only this valve type that can provide the fast operation required.

Such butterfly valves comprise, as is known, a substantially cylindrical hollow valve body which is mounted in the conduit to be intercepted. In the body wall there are formed two diametrically opposed bores accommodating an actuating shaft which extends across the valve body and is carried rotatably therein. Fitted to the body is a disk-like shutter including two wings attached to a diametrical hub; the hub is made hollow for assembling the shutter to the actuating shaft.

At the shutter, in the valve body, there are formed two abutment seats (also referred to as seats) for the shutter, which comprise a pair of semi-annular ribs which engage sealingly by contact with juxtaposed peripheral flat sealing surfaces on the shutter with the valve in its closed condition.

In order to make machining the sealing surfaces easier, the shutter hollow hub is arranged to be shorter in length than the shutter diameter. Otherwise, the hub thickness - (which far exceeds that of the shutter wings at the sealing surfaces) would make machining impossible by mere turning on a lathe and require instead much more expensive, and in any case less accurate, machining techniques.

With valves of the type considered, the tightness problem is specially critical, and the more so in severe operating conditions such as are encountered in bypass conduits of turbine for the recovery of mechanical energy from the exhaust gases of a catalytic cracking plant.

In fact, even if it is assumed that the seal between the shutter sealing surfaces and the corresponding seats is nearly perfect (and actually, such a result could be achieved by accurate machining), at the actuating shaft and its respective bores in the valve body, there exists a high potential for leakage, both in conjunction with the rotary fit between the shaft and the valve body, and with the peculiar mode of operation of a butterfly valve, wherein the shutter bears on two separate seats with its two faces.

To improve tightness around the actuating shaft, a generally employed known approach teaches the appropriate utilization of the shaft bearing members themselves. In fact, between the shaft and the valve body, fitting in the bores of the latter, there are provided two respective cylindrical bushes for supporting the shaft; such bushes are slidable axially to the shaft and the valve body and are rotatable relatively to shaft only; a spring biases elastically each bush against the shutter, specifically against the shutter hub; the bush and hub are machined to provide a tight end engagement therebetween.

Thus, there only occurs relative rotation between the bush and hub, where thanks to the end engagement form, accurate machining can provide a virtually perfect seal, whilst no rotation occurs between the bush and the valve body; the likelihood of the gas leaking out from between the bush and the valve body is made virtually non-existent by a steam back-pressure, i.e. by providing chambers, externally of the valve body, whereinto steam is admitted at a high pressure than the pressure of the gas in the conduit.

The one unsuppressable leakout would be that occurring between the bush cylindrical surface, on the one side, and the shutter wings and abutment seats, on the other side. In fact, the bush, which end engages with the hub made shorter than the shutter diameter dimension to meet the constructional requirements described hereinabove, fits partway in between the two shutter wings, with respect whereto it is to be free to rotate; therefore, some relative clearance becomes mandatory. Likewise, some clearance is necessary between the bush and the abutment seats in the valve body if the bush is to slide axially. These two clearances combined form a gap wherethrough the gas can flow past the shutter, even with the valve in its closed condition.

The situation is, as mentioned above, specially critical in the instance of a valve mounted in a bypass conduit of turbines for recovering mechanical energy from the exhaust gases of a catalytic cracking plant. In fact, the gas high temperature (700-800°C) imposes in that case large expansion rates on the materials, and for that matter, with sudden surges of considerable magnitudes on opening the valve; this, along with the need for a rapid and reliable operation - (ruling out, therefore, any force fit between mutually moving parts), dictates the provision of ample clearance, and accordingly, that the gap responsible for the gas leakouts be made quite large.

In an attempt at improving the tightness of butterfly valves of the aforesaid type as far as feasible, the pertinent art only suggests very high designing accuracy to take into account the thermal changes involved in each application and minimize the magnitudes of the clearances.

This invention has for its object the provision of a butterfly valve wherein leakage is drastically reduced over prior valves, without impairing its reliable operation.

This object is achieved, according to the invention, by a butterfly valve of the above-specified type, characterized in that it comprises, at each end of the hub, a respective sleeve insert attached to the shutter as an axial extension of the hub.

Further features and the advantages of a butterfly valve according to the invention will be more clearly apparent from the following description of a preferred embodiment thereof, given with reference to the accompanying drawings. In the drawings:

Figure 1 is a sectional view of a valve according to the invention, in the closed condition thereof;

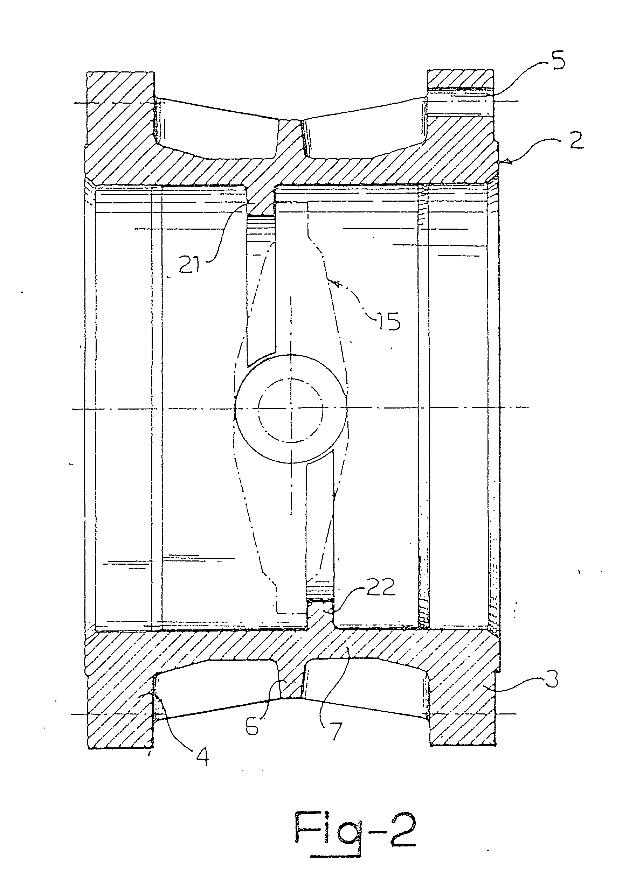

Figure 2 is a section taken along the line II-II of the valve shown in Figure 1;

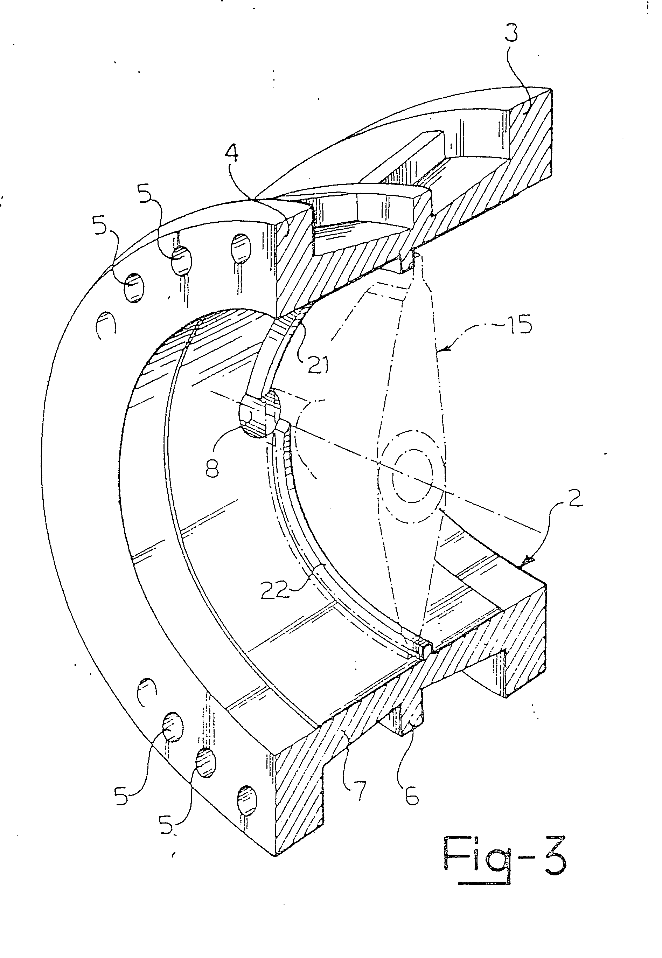

Figure 3 is a part-sectional perspective view of the body of the valve of Figure 1;

Figure 4 is a part-sectional perspective view showing diagramatically details of Figure 4;

Figure 6 is an exploded perspective view showing diagramatically details of Figure 4;

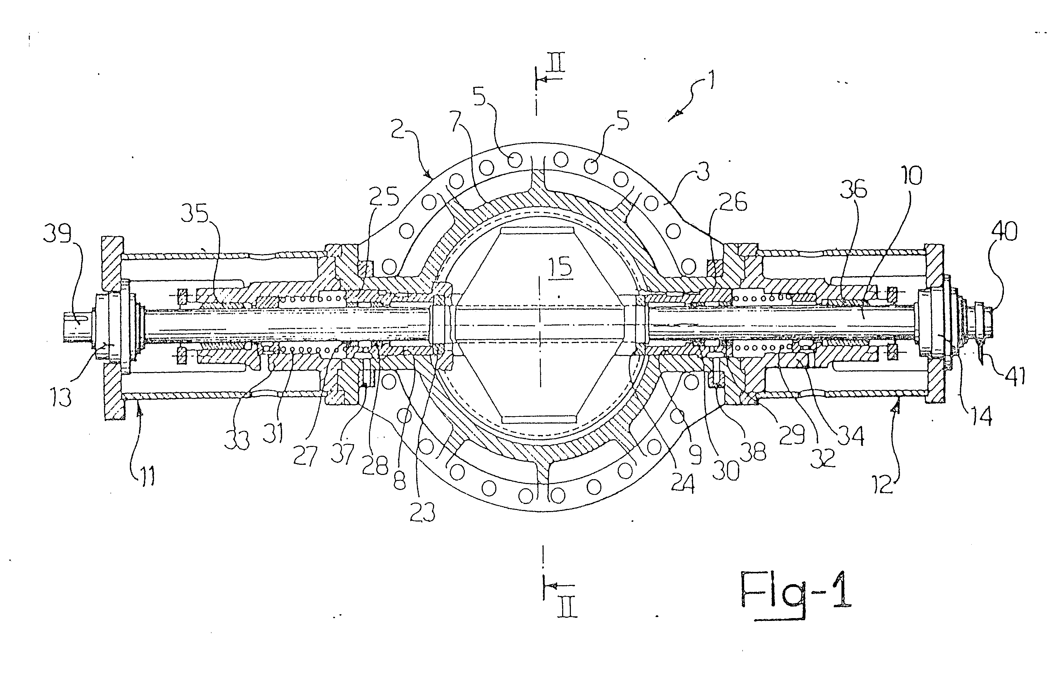

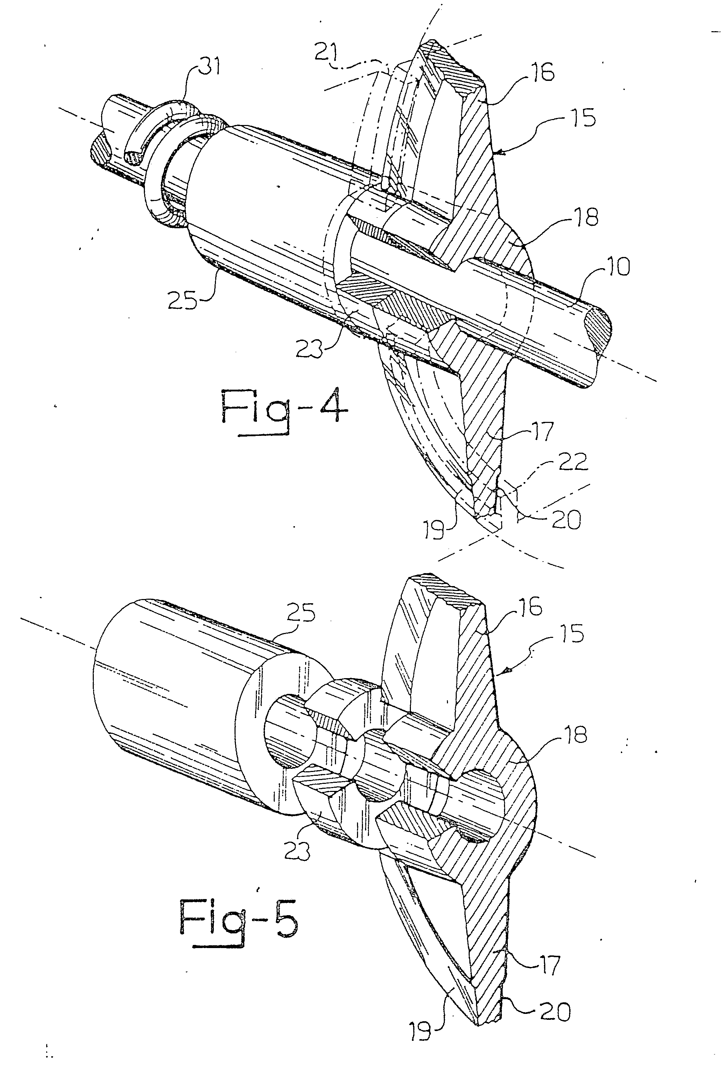

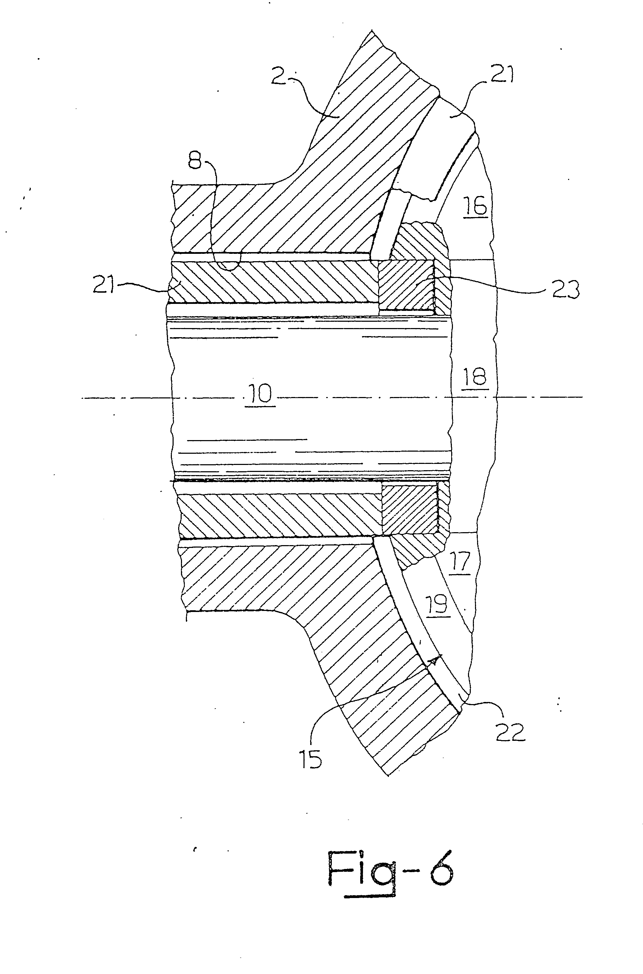

Figure 6 is an enlarged scale sectional view of a detail of the valve of Figure 1.

A butterfly valve 1, particularly for a bypass conduit of a turbine for recovering mechanical energy from the exhaust gases of a catalytic cracking plant (not shown), comprises a valve body 2; the body 2 has a substantially hollow cylinder shape and is open at its opposed ends, where it is provided with two mounting flanges 3 and 4. In a quite conventional way, the body 2 is formed with holes 5 in the flanges 3 and 4, and with outer strengthening ribs 6 for side wall 7.

In the side wall 7, at a central location between the two flanges 3 and 4, there are formed two bores 8 and 9 diametrically opposed to each other, wherethrough an actuating shaft 10 is inserted. The actuating shaft 10 extends through the valve body 2 and is supported rotatably therein through two supporting structures generally indicated at 11 and 12, respectively, which are attached to the body 2 externally of the bores 8 and 9 and are provided with respective bearings 13 and 14 for the shaft 10.

In the valve body 2, there is mounted a disk-like shutter 15, including two wings 16 and 17 attached to a hollow diametrical hub 18 on opposed sides thereof; the hub 18, extending over a shorter length than the diameter of the shutter for the constructional reasons already discussed in connection with the prior art, is mounted on the shaft 10 and made fast with it in a conventional fashion, such as by means of keys (not shown).

In the shutter 15 shown, the wings 16 and 17 are partly radiused to the hub 18 to enhance the stiffness of the shutter 15 and improve its fluid dynamic drag in the valve 1 open condition. Close to the periphery of the shutter 15, there are formed two flat juxtaposed sealing surfaces 19 and 20, on opposite sides of the shutter 15. With the valve 1 in the closed condition, the sealing surfaces 19 and 20 are in contact engagement with respective abutment seats 21 and 22, formed in the valve body 2, and comprising two semi-annular ribs projecting from the side wall 7, being located substantially centrally between the two flanges 3 and 4, between the two bores 8 and 9.

The butterfly valve 1 comprises, moreover, a pair of sleeve inserts 23 and 24, each attached to the shutter 15 at the opposed ends of the hub 18, as a substantial axial continuation thereof. Such inserts 23 and 24 are force fitted between the wings 16 and 17 and are sealed to the shutter 15 as by welding. The length extension of the inserts 23 and 24 is such that the combined length of the hub and the inserts 23 and 24 is shorter than the inside diameter of the valve body 2, in order to allow for removal of the shutter 15 from the valve body 2 for possible replacement thereof.

Mounted in the bores 8 and 9, between the valve body 2 and the actuating shaft 10, are two bushes 25 and 26, provided on their interiors with respective plain bearings 27, 28 and 29, 30, which cooperate with the bearings 13 and 14 to support the shaft 10. The bushes 25 and 26 are slidable axially to the shaft 10 and the housing 2, and are only rotatable with respect to the shaft 10, being keyed to the body 2 by a splined connection (not shown in the drawing).

The bushes 25 and 26 are urged elastically against the inserts 23 and 24, respectively by springs 31 and 32, fitted over the shaft 10 and housed in respective housings 33 and 34, affixed to the valve body 2 inwards of the supporting structures 11 and 12. The contact surfaces between the bushes 25 and 26 and the inserts 23 and 24 are suitably machined to provide a gas-tight mutual end engagement.

Advantageously, the bushes 25 and 26 and the inserts 23 and 24 have the same outside diameter.

The housings 33 and 34, which are sealed by packing seals only diagramatically indicated at 35 and 36, are supplied with steam under pressure through conduits of which the lengths 37 and 38 only are shown. The pressurized steam, as already explained in connection with the prior art, prevents the gas from leaking out of the body 2.

The shaft 10 has one end 39 for coupling to drive members (not shown) for operating the valve 1, and another end 40 provided with a flag finger 41 to make it directly observable from the outside whether the valve 1 is closed or open.

Finally, all the surfaces in contact with the gas are treated in quite a conventional manner to improve their resistance.

As may be appreciated, and as clearly shown, in particular, in Figures 4 and 6, losses from the butterfly valve 1 are much reduced over prior butterfly valves.

In fact, thanks to the sleeve inserts 23 and 24 being rigid with the shutter 15, the only available leakage paths for the gas are the spaces between the bushes 25 and 26 and the abutment seats 21 and 22; all the space which, in prior valves, extended between the bushes and shutter wings has been eliminated altogether.

Actual tests have demonstrated that the leakout rate of a valve according to the invention is approximately one half that of a comparable prior valve.

**Claims**

1. A butterfly valve, particularly for bypass ducting of turbines for recovering mechanical energy from the exhaust gases of a catalytic cracking plant, wherein a disk-like shutter is provided diametrically with a hollow hub for assembly to a shutter actuating shaft extending over a shorter length than the shutter diameter, characterized in that it comprises, at either end of said hub (18), a respective sleeve insert (23) attached to said shutter (15) as a continuation of the hub (18) in the axial direction.

2. A butterfly valve according to Claim 1, characterized in that each said sleeve insert (23) is sealed to said shutter (15) as by welding.

Fig-1

Fig-2

Fig-3

**Fig-4**

**Fig-5**

Fig-6